# DEMANDE DE BREVET EUROPEEN

(11) **EP 2 447 487 A1**
(43) Date de publication de la demande: **02.05.2012**
(21) Numéro de dépôt: 11182411.6
(22) Date de dépôt: 22.09.2011
(51) Int. Cl.: F01N 3/035, F01N 13/02

(54) **Dispositif de traitement de gaz d'echappement de moteur essence avec filtre à particules, ligne d'echappement et vehicule correspondant**

(30) Priorité: 27.10.2010 FR 1058818
(71) Demandeur: PSA Peugeot Citroen Automobiles S.A., 78140 Velizy Villacoublay (FR)
(72) Inventeur: Crehan, Gabriel, 75019 PARIS (FR)
(74) Mandataire: Renous Chan, Véronique

(57) **Abrégé**

L'invention se rapporte à un dispositif de traitement de gaz d'échappement d'un moteur essence, comprenant un organe (60) de dépollution des gaz d'échappement du moteur essence, l'organe de dépollution (60) comprenant un revêtement de catalyseur formant un lit catalytique léché par les gaz d'échappement ; un filtre à particules (40) de filtration des particules de suies des gaz d'échappement du moteur essence, le filtre à particules (40) comprenant un revêtement de catalyseur formant un lit catalytique traversé par les gaz d'échappement.

L'invention se rapporte encore à une ligne d'échappement (84) et à un véhicule automobile comprenant une telle ligne d'échappement (84).

Ainsi l'invention permet l'obtention d'un dispositif améliorant le traitement des gaz d'échappement du moteur essence.

## Description

L'invention se rapporte à un dispositif de traitement de gaz d'échappement d'un moteur essence. L'invention se rapporte en outre à une ligne d'échappement et à un véhicule automobile comprenant une telle ligne d'échappement.

Dans le domaine de l'industrie automobile, la réduction de la consommation de carburant est un problème majeur. Différents procédés de combustion sont ainsi utilisés pour essayer de brûler plus efficacement le carburant, que ce soit dans les moteurs diesel ou dans les moteurs essence. Pour réaliser une plus grande économie de carburant, un procédé d'injection directe pour moteur essence a ainsi été développé, selon lequel l'essence est directement injectée dans la chambre de combustion. Selon ce procédé d'injection directe, les polluants rejetés par le moteur essence sont traités de façon conventionnelle par un catalyseur à trois voies dans la ligne d'échappements. En revanche, il est bien connu que l'injection directe essence produit beaucoup des particules de suie. La présence de ces particules à l'échappement pose un risque pour la santé humaine. En conséquence, la législation exige que leur présence à la sortie de l'échappement soit limitée comme les émissions habituelles comme le monoxyde de carbone, les hydrocarbures et les oxydes d'azotes.

Pour cela, l'invention propose un dispositif de traitement de gaz d'échappement d'un moteur essence, comprenant :
● un organe de dépollution des gaz d'échappement du moteur essence, l'organe de dépollution comprenant un revêtement de catalyseur formant un lit catalytique léché par les gaz d'échappement ;
● un filtre à particules de filtration des particules de suies des gaz d'échappement du moteur essence, le filtre à particules comprenant un revêtement de catalyseur formant un lit catalytique traversé par les gaz d'échappement.

Selon une variante, le revêtement de catalyseur du filtre à particules et le revêtement de catalyseur de l'organe de dépollution sont des catalyseurs à trois voies.

Selon une variante, l'organe de dépollution est formé d'un bloc monolithique ou d'un assemblage par ciment de blocs monolithiques entre eux, le matériau de l'au moins un bloc monolithique ou du ciment étant de préférence choisi dans le groupe consistant en cordierite, SiC, B₄C, Fe, Si₃N₄, BN, AlN, AL₂O₃, ZrO₂, mullite, Al titanate, ZrB₂, et sialon.

Selon une variante, l'organe de dépollution présente une densité de canaux supérieure ou égale à 93 par cm², de préférence supérieure ou égale à 139 par cm², et en ce que le filtre à particules présente une densité de canaux de 46 à 62 par cm².

Selon une variante, l'organe de dépollution et le filtre à particules sont contigus, l'ensemble formé par l'organe de dépollution et le filtre à particules présentant de préférence une longueur inférieure ou égale à 15,24 cm.

L'invention propose en outre une ligne d'échappement d'un moteur essence comprenant le dispositif de traitement précédent.

Selon une variante, selon le sens de l'écoulement des gaz d'échappement dans la ligne d'échappement, l'organe de dépollution est en amont du filtre à particules.

Selon une variante, selon le sens de l'écoulement des gaz d'échappement dans la ligne d'échappement, l'organe de dépollution est en aval du filtre à particules.

Selon une variante, la ligne d'échappement comprend:
● un seul capteur de mesure du taux de dioxygène, le seul capteur étant située entre l'organe de dépollution et le filtre à particules ou en aval de l'organe de dépollution et du filtre à particules ; ou
● deux capteurs de mesure du taux de dioxygène, l'un des capteurs étant situé entre l'organe de dépollution et le filtre à particules et l'autre des capteurs étant situé en aval de l'organe de dépollution et du filtre à particules.

L'invention propose encore un véhicule automobile comprenant un moteur essence à injection directe et la ligne d'échappement précédente.

Selon une variante, le véhicule comprend un injecteur d'additif pour filtre à particules dans un réservoir de stockage de l'essence destinée à la combustion dans le moteur essence.

Selon une variante, le véhicule est dépourvu d'injecteur d'additif pour filtre à particules dans l'essence destinée à la combustion dans le moteur essence.

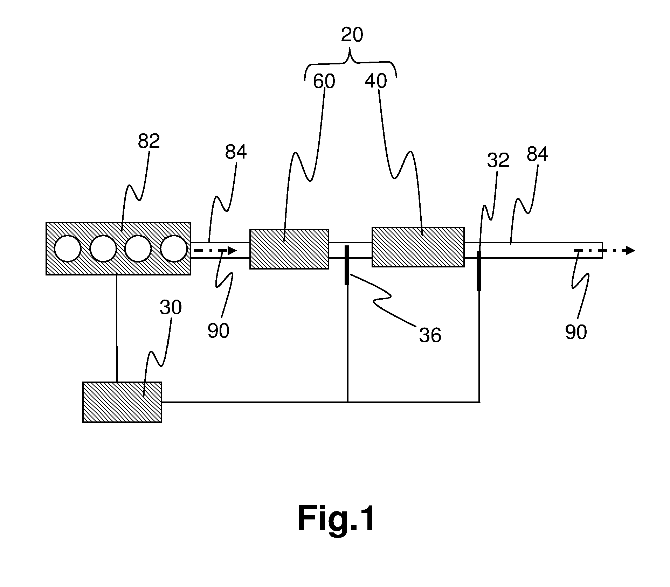

D'autres caractéristiques et avantages de l'invention apparaîtront à la lecture de la description détaillée qui suit des modes de réalisation de l'invention, donnés à titre d'exemple uniquement et en référence au dessin qui montre :
● figure 1, un schéma d'un moteur essence associé à une ligne d'échappement des gaz de combustion du moteur selon un mode de réalisation de l'invention.

L'invention se rapporte à un dispositif de traitement de gaz d'échappement d'un moteur essence. La figure 1 représente un mode de réalisation d'un tel dispositif de traitement 20. Selon la figure 1 le dispositif 20 de traitement est associé au moteur essence 82 pour traiter les gaz d'échappement 90.

Le dispositif comprend un organe 60 de dépollution des gaz d'échappement 90 du moteur essence 82. Cet organe de dépollution 60 comprend un revêtement de catalyseur pour permettre la catalyse de réactions chimiques entraînant la réduction de la quantité de polluants dans les gaz d'échappements 90. La dépollution par l'organe 60 peut concerner les polluants incluant les oxydes d'azotes (tel que NO, NO₂ couramment regroupé sous l'appellation générique NOₓ), le monoxyde de carbone (CO), et les hydrocarbures imbrûlés (abrégé sous la forme simplifié : HC). Dans le mode de réalisation préféré de l'organe de dépollution 60 où les quantités de ces trois types de polluants sont réduites par le revêtement catalyseur, le catalyseur est dit catalyseur à trois voies. Dans un tel mode de réalisation, l'organe de dépollution 60 est classiquement un bloc catalyseur à trois voies (connu en anglais sous la dénomination *three-way catalytic converter*)*.*

Le dispositif comprend en outre un filtre à particules 40 de filtration des particules de suies dans les gaz d'échappement 90 du moteur essence 82. Le filtre à particules 40 est adapté à la filtration de particules de suies provenant de la combustion d'essence (correspondant ainsi en anglais à un *gasoline particulate filter* abrégé en GPF), qui se différencie des filtres à particules classiques assurant une filtration des particules de suies issues de la combustion du gasoil (qui correspond en anglais à un *diesel particulate filter,* abrégé en DPF). Notamment, le filtre à particules 40 proposé est adapté à la taille des particules de suies provenant de la combustion de l'essence qui diffère de la taille des particules de suies provenant de la combustion du gasoil. Dans la suite du document on utilise indifféremment les termes "filtre à particules", "filtre à particules adapté à la filtration de particules de suies provenant de la combustion d'essence" et l'abréviation française "FAP".

Le FAP 40 comporte en outre un revêtement catalytique pour permettre la catalyse de réaction chimique entraînant la réduction de la quantité de polluants dans les gaz d'échappements 90. Le revêtement catalyseur du FAP 40 peut être le même revêtement catalyseur que celui de l'organe 60. De préférence, le revêtement catalyseur du FAP 40 est un catalyseur à trois voies.

Les revêtements catalytiques du FAP 40 et de l'organe de dépollution 60 se différentient au moins en ce qu'ils forment respectivement un lit catalytique traversé et un lit catalytique léché.

En effet, dans le FAP 40, les gaz d'échappement 90 traversent la matière composant le FAP 40. Ainsi lorsque le FAP 40 est formé de canaux, chacun de ces canaux comprend une extrémité bouchée, de sorte que les gaz d'échappement s'écoulant dans le FAP 40 passent de canaux en canaux en traversant les parois des différents canaux du FAP 40 pour sortir du FAP 40. Le revêtement catalytique du FAP 40 étant déposé sur les parois des canaux, le lit catalytique ainsi formé est alors traversé par les gaz d'échappement 90.

De façon contraire, les gaz d'échappement 90 peuvent s'écouler dans l'organe de dépollution 60 sans traverser la matière composant cet organe. Ainsi lorsque l'organe de dépollution 60 est formé de canaux, ces canaux comportent chacun deux extrémités débouchantes, de sorte que les gaz d'échappement s'écoulant dans l'organe 60 passent d'une extrémité à l'autre d'un canal sans traverser les parois du canal. L'organe de dépollution 60 est une structure avec écoulement constant (de l'anglais *flow through structure*) pour les gaz d'échappements. Le revêtement catalytique de l'organe de dépollution 60 étant déposé sur les parois des canaux, le lit catalytique ainsi formé est alors simplement léché par les gaz d'échappement 90, et non pas traversé.

L'utilisation d'un FAP 40 permet de réduire la quantité de suies dans les gaz d'échappement 90, contribuant ainsi au traitement des gaz d'échappement. Par ailleurs, la présence du revêtement catalyseur dans le FAP 40 permet de réduire la quantité de polluants dans les gaz d'échappement en facilitant les réactions chimiques de dépollution.

Le dispositif 20 proposé permet d'améliorer le traitement des gaz d'échappement par rapport à un dispositif comprenant uniquement un organe de dépollution avec un revêtement catalytique, du fait de la présence du FAP 40 avec revêtement catalytique. De surcroît, la présence des revêtements de catalyseur à la fois dans le FAP 40 et dans l'organe de dépollution 60 produit avantageusement un effet synergique.

Premièrement, en comparaison à un dispositif comprenant uniquement un FAP 40 avec un revêtement catalytique (i.e. en l'absence d'organe de dépollution avec lit catalytique léché), le dispositif 20 proposé permet un traitement des polluants des gaz d'échappement même lorsque le dispositif est froid (par exemple, au début de l'allumage du moteur essence 82). En effet l'organe de dépollution 60 à écoulement constant présente une masse moins importante que celle du FAP 40. L'organe de dépollution 60 présente donc une plus faible inertie thermique, permettant une montée en température plus importante. La montée en température plus importante de l'organe de dépollution 60 entraîne une activation plus rapide du dispositif 20 proposé par rapport à un dispositif ne comportant qu'un FAP.

Deuxièmement, toujours en comparaison à un dispositif comprenant uniquement un FAP 40 avec un revêtement catalytique (i.e. en l'absence d'organe de dépollution avec lit catalytique léché), le dispositif 20 proposé permet d'assurer un plus grand nombre de réactions chimiques. Ce plus grand nombre de réactions chimiques est dû à l'augmentation possible de la quantité de catalyseur dans l'organe de dépollution 60 pour le dispositif 20 proposé. L'organe de dépollution 60 étant du type à écoulement constant, on peut augmenter la quantité de catalyseur sans entraîner une augmentation de la contre-pression de l'organe 60 contrairement au FAP 40 pour lequel une augmentation de la quantité de catalyseur en lit catalytique traversé détériore la contre-pression. De plus, on peut augmenter la quantité de catalyseur en augmentant la taille de l'organe de dépollution 60 au lieu de la taille du FAP 40. L'augmentation de la taille de l'organe de dépollution 60 par rapport à l'augmentation de la taille du FAP 40 est avantageuse d'un point de vue économique, l'organe de dépollution 60 présentant une structure moins complexe que le FAP 40.

Du fait de la présence de l'organe de dépollution 60 avec revêtement catalytique , le dispositif 20 proposé permet ainsi d'améliorer la dépollution par rapport à un dispositif comprenant uniquement un FAP avec un revêtement catalytique (i.e. en l'absence d'organe de dépollution avec lit catalytique léché). En définitive l'invention permet l'obtention d'un dispositif améliorant le traitement des gaz d'échappement du moteur essence.

L'invention propose aussi une ligne d'échappement comprenant le dispositif de dépollution 20. La figure 1 montre une telle ligne d'échappement 84 associée au moteur essence 82. Le dispositif 20 formé de l'organe 60 et du FAP 40 est disposé dans la ligne d'échappement 84.

La suite de la description décrit plus particulièrement des modes préférés de réalisation du dispositif de dépollution 20 ou de la ligne d'échappement 84.

Conformément à la figure 1, l'organe de dépollution 60 est en amont du FAP 40, selon le sens de l'écoulement des gaz d'échappement 90 dans la ligne d'échappement 84. Les suies présentes dans les gaz 90 passent alors d'abord dans l'organe de dépollution 60. En sortie du moteur 82, ces suies peuvent être enveloppées dans des couches composées de HC peu volatiles pour former des composés qui ressemblent à des boules de graisse. Ces graisses grossissent la taille des particules de suies ce qui peut entraîner un colmatage du FAP 40. En passant par l'organe de dépollution 60, ces couches de HC sont oxydées par la présence du catalyseur. Les suies sont ainsi de tailles plus petites lorsque les gaz 90 rentrent dans le FAP 40 en aval (on dit qu'elles sont "séchées"). La réduction de la taille des suies en aval du FAP 40 diminue la probabilité de colmatage du FAP 40 par les suies. La fréquence des régénérations du FAP 40 est diminuée en conséquence. Selon une variante de réalisation, l'organe de dépollution 60 est en aval du FAP 40, de façon analogue à ce qu'il peut se faire dans le traitement des gaz d'échappement de moteur diesel.

D'une manière générale, la température des gaz d'échappement en moteur essence 82 est plus élevée qu'en moteur diesel. Les températures des gaz d'échappement de moteur essence peuvent être par exemple de l'ordre de 550°C à 660°C. Avec de telles températures de gaz, les suies filtrées par le FAP 40 peuvent être continuellement brûlées dans le FAP 40. Ceci contribue à la diminution de la fréquence des phases de régénérations pures du FAP 40. Ainsi le FAP 40 proposé peut se régénérer continuellement en limitant les phases de régénération spécifique (ou phase de régénération pure), voire en les supprimant complètement. La réduction des régénérations du FAP 40 permet avantageusement la réduction de la consommation du moteur essence 82 puisque les phases de régénérations pures entraînent ponctuellement des surconsommations de carburants par le moteur 82.

Du fait de cette réduction des régénérations, le véhicule automobile comprenant la ligne d'échappement 84 peut avantageusement être dépourvue d'injecteur d'additif pour FAP. Cependant, on peut prévoir la disposition d'un injecteur d'additif pour FAP dans un mode de réalisation du véhicule automobile où le dispositif 20 de traitement des gaz étant trop éloigné du moteur 82, les gaz d'échappement 90 n'ont pas une température suffisante pour la régénération continue du FAP 40. Selon un tel mode de réalisation, l'injecteur d'additif pour FAP peut alors être logé à proximité du réservoir de stockage d'essence du véhicule, de manière à injecter l'additif dans l'essence destinée à la combustion dans le moteur essence 82.

Selon un mode de réalisation préféré de l'invention, l'organe de dépollution 60 est formé d'un bloc monolithique ou d'un assemblage par ciment de blocs monolithiques entre eux. Les blocs monolithiques ou cellules formant l'organe de dépollution 60, présentent des canaux comportant chacun deux extrémités débouchantes, assurant l'écoulement constant des gaz d'échappement au travers de l'organe 60. Pour former ces canaux de façon monolithique et obtenir un organe de dépollution le plus monolithique possible, le matériau des blocs et/ou du ciment est avantageusement choisi dans le groupe consistant en cordierite, SiC, B₄C, Si₃N₄, BN, AlN, AL₂O₃, ZrO₂, mullite, Fe, Al titanate, ZrB₂, et sialon. Le FAP 40 peut aussi être réalisé en un matériau choisi dans le groupe précédent.

Le FAP 40 et l'organe de dépollution 60 peuvent se différencier notamment par la densité des canaux qu'ils comprennent. En effet, l'organe de dépollution 60 peut présenter une densité de canaux supérieure ou égale à 600 canaux par inch², soit 93 canaux par cm², de préférence supérieure ou égale à 900 canaux par inch², soit 139 canaux par cm². Quant à lui, le FAP 40 peut présenter une densité de canaux de 300 à 400 par inch ², soit 46 à 62 canaux par cm².

L'utilisation du dispositif 20 proposé ou de ligne d'échappement 84 comprenant un tel dispositif 20 avec le moteur essence 82 est particulièrement avantageuse lorsque le moteur essence 82 est à injection directe. De même un tel dispositif 20 est particulièrement avantageux dans un véhicule automobile comprenant le moteur essence 82 à injection directe.

En effet, la solution classique de traitement des gaz d'échappement d'un moteur essence à injection directe utilise un simple organe de dépollution avec un revêtement catalytique léché à trois voies. Or l'injection directe mise en oeuvre sur un moteur à injection directe peut entraîner la formation de suies, dont les normes Euro 5 ou Euro 6 tendent à imposer une réduction des quantités. Ainsi l'invention proposée avec le FAP 40 permet de réduire la quantité de suies dans les gaz d'échappement de moteur essence 82 à injection directe du fait du FAP 40.

De plus la présence du revêtement catalytique traversé dans le FAP 40 améliore la capacité de catalyse des réactions chimiques pour la dépollution des gaz. Cette amélioration de la capacité de catalyse permet la réduction de la quantité de métaux précieux utilisés dans les revêtements catalytiques.

De façon alternative ou complémentaire, l'amélioration de la capacité de catalyse permet aussi de réduire la taille de l'organe de dépollution 60 sans altérer les performances de catalyse des réactions chimiques pour la dépollution des gaz. Une telle réduction de la taille de l'organe de dépollution 60 entraîne l'obtention du dispositif proposé 20 avec une taille compacte. Ainsi l'association synergique de l'organe de dépollution 60 et du FAP 40 permet de réduire le volume du dispositif de dépollution 20 par rapport à un dispositif de dépollution comprenant un organe de dépollution avec revêtement catalytique et un FAP sans revêtement catalytique.

Cette compacité améliorée est particulièrement avantageuse dans le cas d'une utilisation du dispositif 20 pour les petits modèles de véhicules automobiles. Le dispositif 20 proposé est d'autant plus compact que l'organe de dépollution 60 et le FAP 40 sont contigus, c'est-à-dire lorsque l'organe de dépollution 60 et le FAP 40 sont en contact. Dans un tel mode de réalisation, la compacité de l'organe de dépollution 60 peut permettre d'obtenir un dispositif 20 présentant une longueur inférieure ou égale à 6 inch, soit 15,24 cm, tout en intégrant le FAP 40 dans le dispositif 20.

Du fait de la fonction de filtration du FAP 40, il peut être délicat d'imprégner le catalyseur à trois voies sur les parois de canaux pour former un lit catalytique traversé dans le FAP 40. Dans le mode de réalisation où les revêtements de catalyseur du FAP 40 et de l'organe 60 sont tous les deux des catalyseurs à trois voies, l'imprégnation du catalyseur à trois voies en tant que revêtement catalytique est plus aisée à réaliser sur l'organe de dépollution 60 que sur le FAP 40. Ainsi la présence dans le dispositif 20 de l'organe de dépollution 60 et du FAP 40 permet une augmentation la quantité de catalyseur imprégné du fait de la meilleure imprégnation de l'organe de dépollution 60.

Malgré la présence de deux revêtements de catalyseur à trois voies dans le dispositif 20, la ligne d'échappement 84 proposée peut ne contenir qu'un seul capteur de mesure de taux de dioxygène. La figure 1 présente deux positions possibles pour cet unique capteur dans la ligne d'échappement 84. Le capteur peut ainsi être positionné entre l'organe de dépollution 60 et le FAP 40, correspondant au capteur référencé 36. Alternativement le capteur peut être positionné en aval de l'organe de dépollution 60 et du FAP 40, correspondant au capteur référencé 32. La discussion sur les positions des capteurs 32 ou 36 est indépendante du positionnement de l'organe de dépollution 60 et du FAP 40 l'un par rapport à l'autre. Le capteur de mesure de taux de dioxygène 32 ou 36 permet de contrôler la richesse en dioxygène des gaz d'échappement. Le contrôle de la richesse en dioxygène entraîne la possibilité d'alterner la catalyse de réactions chimiques de réduction et d'oxydation pour les deux revêtements de catalyseur. Un calculateur 30 peut être prévu dans le véhicule automobile pour assurer ce contrôle de la richesse en dioxygène à partir des informations obtenues par le capteur. Le capteur 32 ou 36 est par exemple une sonde lambda ou un capteur proportionnel. La présence de deux capteurs de dioxygène peut être préférable pour le contrôle de la richesse en dioxygène dans les gaz d'échappement, lors de mode de fonctionnement anormal de la ligne d'échappement (ou mode de fonctionnement dégradé). Ces deux capteurs peuvent alors prendre la position des capteurs 32 et 36.

## Revendications

1. Un dispositif de traitement de gaz d'échappement d'un moteur essence, comprenant :
● un organe (60) de dépollution des gaz d'échappement du moteur essence, l'organe de dépollution (60) comprenant un revêtement de catalyseur formant un lit catalytique léché par les gaz d'échappement ; le dispositif étant **caractérisé en ce qu'**il comprend en outre :
● un filtre à particules (40) de filtration des particules de suies des gaz d'échappement du moteur essence, le filtre à particules (40) comprenant un revêtement de catalyseur formant un lit catalytique traversé par les gaz d'échappement, l'organe de dépollution (60) et le filtre à particules (40) étant contigus.

2. Le dispositif de traitement selon la revendication 1, **caractérisé en ce que** le revêtement de catalyseur du filtre à particules (40) et le revêtement de catalyseur de l'organe de dépollution (60) sont des catalyseurs à trois voies.

3. Le dispositif de traitement selon la revendication 1 ou 2, **caractérisé en ce que** l'organe de dépollution (60) est formé d'un bloc monolithique ou d'un assemblage par ciment de blocs monolithiques entre eux, le matériau de l'au moins un bloc monolithique ou du ciment étant de préférence choisi dans le groupe consistant en cordierite, SiC, B₄C, Si₃N₄, BN, AlN, Fe, AL₂O₃, ZrO₂, mullite, Al titanate, ZrB₂, et sialon.

4. Le dispositif de traitement selon l'une des revendications 1 à 3, **caractérisé en ce que** l'organe de dépollution (60) présente une densité de canaux supérieure ou égale à 93 par cm², de préférence supérieure ou égale à 139 par cm², et **en ce que** le filtre à particules (40) présente une densité de canaux de 46 à 62 par cm².

5. Le dispositif de traitement selon l'une des revendications 1 à 4, **caractérisé en ce que** l'ensemble formé par l'organe de dépollution (60) et le filtre à particules (40) présentent une longueur inférieure ou égale à 15,24 cm.

6. Une ligne d'échappement de gaz d'échappement d'un moteur essence **caractérisée en ce qu'**elle comprend le dispositif de traitement selon l'une des revendications 1 à 5.

7. La ligne d'échappement selon la revendication 6, **caractérisée en ce que** selon le sens de l'écoulement des gaz d'échappement dans la ligne d'échappement (84), l'organe de dépollution (60) est en amont du filtre à particules (40).

8. La ligne d'échappement selon la revendication 6, **caractérisée en ce que** selon le sens de l'écoulement des gaz d'échappement dans la ligne d'échappement (84), l'organe de dépollution (60) est en aval du filtre à particules (40).

9. La ligne d'échappement selon l'une des revendications 6 à 8, **caractérisée en ce qu'**elle comprend :
● un seul capteur (32 ; 36) de mesure du taux de dioxygène, le seul capteur étant située entre l'organe de dépollution (60) et le filtre à particules (40) ou en aval de l'organe de dépollution (60) et du filtre à particules (40) ; ou
● deux capteurs (32, 36) de mesure du taux de dioxygène, l'un des capteurs étant situé entre l'organe de dépollution (60) et le filtre à particules (40) et l'autre des capteurs étant situé en aval de l'organe de dépollution (60) et du filtre à particules (40).

10. Un véhicule automobile **caractérisé en ce qu'**il comprend un moteur essence à injection directe (82) et la ligne d'échappement (84) selon l'une des revendications 6 à 9.

11. Le véhicule automobile selon la revendication 10, **caractérisé en ce que** le véhicule comprend un injecteur d'additif pour filtre à particules dans un réservoir de stockage de l'essence destinée à la combustion dans le moteur essence (82).

12. Le véhicule automobile selon la revendication 10, **caractérisée en ce que** le véhicule est dépourvu d'injecteur d'additif pour filtre à particules dans l'essence destinée à la combustion dans le moteur essence (82).
